# EUROPÄISCHE PATENTSCHRIFT

(11) **EP 1 959 178 B1**
(45) Veröffentlichungstag und Bekanntmachung des Hinweises auf die Patenterteilung: **02.05.2012**
(21) Anmeldenummer: 08100731.2
(22) Anmeldetag: 22.01.2008
(51) Int. Cl.: F16K 31/06, F16K 31/08

(54) **Elektromagnetisch zu betätigendes Ventil**
Electromagnetically operated valve
Soupape devant être actionnée de manière électromagnétique

(30) Priorität: 29.01.2007 DE 102007004377
(43) Veröffentlichungstag der Anmeldung: 20.08.2008
(73) Patentinhaber: Diener Precision Pumps Ltd., 8424 Embrach (CH)
(72) Erfinder: Walter, Raimond, 97520 Röthlein (DE)
(74) Vertreter: Liedtke, Markus

(56) Entgegenhaltungen:
- DE-A1- 19 918 007
- GB-A- 1 008 888
- GB-A- 2 124 736
- US-A1- 2004 222 395
- US-A1- 2005 189 021

## Beschreibung

Die Erfindung betrifft ein elektromagnetisch steuerbares Ventil zum Steuern von flüssigen oder gasförmigen Medien mit einem Elektromagnet und mindestens zwei Medienanschlüssen, die von einem Anker geöffnet und geschlossen werden.

Die Erfindung ist vorzugsweise in der Medizintechnik, zum Beispiel an Dialyse- und Analysengeräten, und für Anwendungen an Tintenstrahldruckern einsetzbar. Sie kann darüber hinaus für vielfältige Einsatzgebiete, bei denen aggressive oder empfindliche Medien über Elektro-Magnetventile gesteuert werden, angewendet werden.

Für diese Einsatzfälle bekannte Lösungen verwenden ein Magnetsystem, bei dem die Bewegung des Ankers ein Elastomer-Dichtelement betätigt, welches Dichtsitze schließt oder öffnet. Die stromlose Position des Ankers wird durch eine Druck- oder Zugfeder gesichert. Um die Anforderungen an derartige Systeme, wie Positioniergenauigkeit zum Dichtelement, Anschlagdämpfung, Realisierung einer definierten Weg-Kraft-Kennlinie zu gewährleisten, erfordern diese Systeme eine hohe mechanische Präzision einer Reihe von Bauteilen. Zur Gewährleistung einer ausreichenden Lebensdauer erfordern diese Systeme weiterhin Maßnahmen wie Antikorrosionsbeschichtungen, Spritzwasserschutz und Gleitbeschichtungen. Die hohe mechanische Präzision sowie Maßnahmen zum Verschleißschutz verursachen wesentliche Herstellungskosten.

Wünschenswert für diese Magnetventile ist eine Trennung des zu steuernden Mediums vom Elektromagnetsystem. Bisherige Ventillösungen verzichten im Allgemeinen auf eine Medientrennung zugunsten der Einfachheit oder weil diese bei besonders kleinen Ventilen nicht realisierbar ist. Ausführungen ohne Medientrennung weisen Nachteile auf, weil sich das zu steuernde Fluid im Magnetsystem befindet, wodurch eine Reihe von Mängeln bedingt sind, wie großer Totraum, schlechte Spülbarkeit, Erwärmung des Mediums, Korrosionsprobleme und Verkleben des Ankers.

Es wurde versucht, diese Nachteile zu umgehen, indem bewegliche Separationselemente, die das zu steuernde Fluid vom Antriebssystem abkapseln, verwendet werden. Solche Separationselemente sind zum Beispiel Faltenbälge aus Kunststoff, Elastomer oder Metall. Die Antriebsbewegung des Elektromagneten wird unter Verformung des Separationselementes auf das Dichtelement im Ventilkörper geleitet. Diese Separationselemente sind hochwertige und gleichzeitig funktionskritische Bauteile, da sie bei jedem Schaltvorgang deformiert werden und da bei einem Defekt das Medium austritt. Die erforderlichen Deformationskräfte sowie die Abhängigkeiten von Druck, Temperatur und Vorgeschichte sind störende Effekte für die reproduzierbare Funktion der Ventile.

Nachteilig ist bei den bekannten Anordnungen ferner, dass diese teilweise einen verhältnismäßig großen Totraum erfordern. Bei Ventilen ohne Medientrennung besteht ein unerwünscht großer Totraum und eine sehr schlechte Freispülbarkeit, weil das komplette, verwinkelte Magnetsystem vom Fluid benetzt ist. Bei Ventilen mit Medientrennung sind Totraum und Freispülbarkeit wegen der üblichen Faltenbalgkonstruktion teilweise ungünstig.

Die GB 1,008,888 A offenbar ein elektromagnetisch steuerbares Ventil zum Steuern von flüssigen oder gasförmigen Medien mit einem Elektromagneten und mindestens zwei Medienanschlüssen, die von einem Anker verschließbar oder freigebbar sind, wobei der Anker aus einem magnetisierbaren Material besteht und kipp- oder verschiebbar in einem Ventilkörpergehäuse aus nichtmagnetischem Material angeordnet ist, wobei die Medienanschlüsse in das Ventilkörpergehäuse münden, und sich das Ventilkörpergehäuse zwischen dem Elektromagneten und einer weiteren Anordnung, die aus Permanentmagneten oder weichmagnetischen Bauteilen oder aus einem weiteren Elektromagneten besteht, befindet.

Der Erfindung liegt die Aufgabe zu Grunde, ein Magnetventil gemäß dem Oberbegriff des Anspruchs 1 anzugeben, bei dem besonders hohe Haltekräfte des Ankers im stromlosen Zustand und besonders hohe abstoßende bzw. anziehende Kräfte auf den Anker bei Bestromung wirken.

Erfindungsgemäß wird die Aufgabe mit einer Anordnung gelöst, welche die in Anspruch 1 angegebenen Merkmale enthält.

Vorteilhafte Ausgestaltungen sind in den Unteransprüchen angegeben.

Gegenstand der Anmeldung sind auch Merkmalskombinationen, bei denen die in den Ansprüchen angegebenen Einzelmerkmale beliebig miteinander kombiniert werden.

Bei der erfindungsgemäßen Anordnung besteht der Anker aus einem magnetisierbaren (weichmagnetischen oder hartmagnetischen) Material und ist kippbar oder verschiebbar in einem bis auf mindestens zwei Medienanschlüsse geschlossenen Ventilkörpergehäuse aus nichtmagnetischem Material angeordnet. Der Anker besteht bei der bistabilen Ausführung aus einem hartmagnetischen Material. Die Medienanschlüsse münden in das Ventilkörpergehäuse, wobei das Ventilkörpergehäuse sich zwischen einem Elektromagneten mit einer Spule und einer weiteren Anordnung, die aus Permanentmagneten oder weichmagnetischen Bauteilen oder aus einem weiteren Elektromagneten besteht, befindet.

Der Elektromagnet umfasst bevorzugt ein U-förmiges Joch mit zwei Jochpolen, die beide mit dem Anker in Wechselwirkung stehen. Dadurch wird auch bei großen magnetischen Luftspalten, die sich aus einer großen Wandstärke des Ventilkörpers und gegebenenfalls einer Beschichtung des Ankers zum Schutz gegen aggressive Medien ergibt, ein besonders hoher Wirkungsgrad erreicht.

Bei einer nicht erfindungsgemäßen Ausgestaltung als monostabiles Ventil besteht der Anker aus weichmagnetischem Stahl und die weitere Anordnung aus einer Permanentmagneteinrichtung, wobei bei stromlosem Elektromagneten der von der Permanentmagneteinrichtung erzeugte magnetische Fluss durch den Anker verläuft und diesen in Richtung der Permanentmagneteinrichtung anzieht. Wird der Elektromagnet bestromt, erzeugt er einen magnetischen Fluss, der den magnetischen Fluss des Permanentmagneten überlagert. Dadurch wird der Anker zu den Jochpolen hingezogen. Dabei weisen beide Jochpole in einer Arbeitsrichtung eine anziehende Wirkung auf. Der magnetische Fluss schließt sich also, je nach Position, entweder über die Permanentmagneteinrichtung oder über das Joch des Elektromagneten.

Eine weitere vorteilhafte Ausgestaltung sieht vor, dass der Anker aus permanentmagnetischem Material besteht und die weitere Anordnung aus weichmagnetischen Bauteilen besteht. Diese Anordnung stellt eine bistabile Variante dar. Der permanentmagnetische Anker wird durch außerhalb des Ventilkörpers angebrachte, weichmagnetische Bauelemente, d.h. die Jochpole oder die weitere Anordnung in seinen beiden Schaltpositionen gehalten. Die Unterscheidung, in welche Position der Anker durch einen kurzen Stromimpuls geschaltet werden soll, wird entweder durch die Stromrichtung oder durch die wahlweise Bestromung zweier Teilspulen realisiert. Beide Jochpole weisen hierbei in einer Arbeitsrichtung eine abstoßende oder anziehende Wirkung auf.

Vorzugsweise ist zwischen dem Anker und dem Elektromagneten, ebenso wie zwischen dem Anker und der weiteren Anordnung eine nichtmagnetische Wandung, insbesondere als Teil des Ventilkörpergehäuses angeordnet. Diese Ausführungsform vermeidet einen Kontakt des Mediums mit dem Elektromagneten bzw. der weiteren Anordnung, so dass diese auch bei aggressiven Medien nicht korrodiert werden.

In einer weiteren Ausführungsform weist das Ventilkörpergehäuse hingegen Öffnungen auf, durch die die Jochpole soweit ins Innere des Ventilkörpergehäuses ragen, dass der Anker ohne Luftspalt direkt daran anschlagen kann. Eine solche Ausführungsform hat den Vorteil, dass zum Halten des Ankers an den Jochpolen bei der monostabilen Ausführungsform ein erheblich geringerer magnetischer Fluss (und damit eine geringer Bestromung der Spule) benötigt wird als zum Anziehen des Ankers. Beispielsweise können an den Elektromagneten zum Anziehen des Ankers 24 V angelegt werden. Liegt der Anker nach kurzer Zeit dort an, beispielsweise nach einigen Millisekunden, kann die Spannung auf z.B. 3V abgesenkt werden. Auf diese Weise wird einerseits Energie gespart, andererseits wird eine zu starke Erwärmung des Elektromagneten durch Verlustleistung, insbesondere bei miniaturisierten Ventilen, vermieden. Damit der Anker bei dieser geringen Haltespannung an den Jochpolen haften bleibt, ist ein direkter Kontakt zwischen Anker und Jochpolen notwendig. Die Jochpole werden in den Öffnungen des Ventilkörpers abgedichtet, beispielsweise mittels Elastomer-Dichtelementen.

Der permanentmagnetische Anker ist in einer nicht erfindungsgemäßen Ausführungsform mittels Spritzguss gebildet und so magnetisiert, dass sich an einem Ende des Ankers in Richtung einer Längsachse ein Nordpol und an einem in Richtung der Längsachse gegenüberliegenden Ende ein Südpol befindet, wobei zwischen Nordpol und Südpol verlaufende Feldlinien im Wesentlichen rechtwinklig zur Längsachse aus dem Anker austreten und/oder in den Anker eintreten. Durch diese Art der Magnetisierung schließt der permanentmagnetische Anker in beiden Schaltstellungen jeweils einen magnetischen Kreis, so dass in beiden Schaltstellungen hohe Haltekräfte im stromlosen Zustand erreicht werden. Bei Bestromung des Elektromagneten wirken, abhängig von einer Stromrichtung besonders hohe abstoßende bzw. anziehende Kräfte auf den Anker, da durch diese Art der Magnetisierung beide Enden des Ankers am Kraftaufbau beteiligt sind. Die magnetischen Feldlinien treten bei dieser Magnetisierung nur in den Arbeitsluftspalt aus, so dass keine unerwünschten Wechselwirkungen mit der Außenwelt auftreten, d.h. es treten weder magnetische Feldlinien aus dem Ventil aus, noch wirken Magnetfelder in der Umgebung auf das Ventil ein. Bei herkömmlich, d.h. axial magnetisierten Ankern treten die magnetischen Feldlinien in Richtung der Längsachse ein bzw. aus, so dass dort erheblich kleinere Kräfte nutzbar sind und eine Wechselwirkung mit Magnetfeldern in der Umgebung nicht ausgeschlossen werden kann.

Erfindungsgemäß ist der permanentmagnetische Anker mehrteilig, beispielsweise dreiteilig so gebildet, dass sich an einem Ende des Ankers in Richtung einer Längsachse ein Nordpol und an einem in Richtung der Längsachse gegenüberliegenden Ende ein Südpol befindet, wobei zwischen Nordpol und Südpol verlaufende Feldlinien im Wesentlichen rechtwinklig zur Längsachse aus dem Anker austreten bzw. in den Anker eintreten. Ein solcher dreiteiliger Anker kann beispielsweise so gebildet sein, dass ein Permanentmagnet zwischen zwei ferromagnetischen Komponenten angeordnet ist. Außerhalb des Einbauorts ohne benachbarte magnetisierbare Metallteile und Magnetfelder verhält sich ein solcher dreiteiliger Anker wie ein axial magnetisierter Magnet. Am Einbauort zwischen dem Elektromagneten und der ferromagnetischen weiteren Anordnung streben die magnetischen Feldlinien jedoch den Weg des geringsten Widerstands durch die ferromagnetischen Komponenten über den kleinstmöglichen Luftspalt zu den Jochpolen des Elektromagneten bzw. zur weiteren Anordnung hin an. Auch hier treten weder magnetische Feldlinien aus dem Ventil aus, noch wirken Magnetfelder in der Umgebung auf das Ventil ein.

In einer bevorzugten Ausführungsform ist durch den Anker beim Umschalten zwischen zwei Positionen im Ventilkörpergehäuse eine zweistufige Kippbewegung ausführbar, bei der zunächst ein erstes Ende des Ankers und anschließend ein zweites Ende des Ankers die Position wechselt.

Dabei verschließt in einer Ausführungsform nur das zweite Ende des Ankers in der Position, aus der heraus die zweistufige Kippbewegung ausführbar ist, einen Ventildichtsitz eines der Medienanschlüsse. Der Positionswechsel des ersten Endes ist mit vergleichsweise geringem Kraftaufwand zu bewerkstelligen, da eine Druckbeaufschlagung hier nicht wirksam ist.. Dabei wird durch Hebelwirkung der Ventildichtsitz am zweiten Ende bereits leicht geöffnet, so dass eine Druckdifferenz abgebaut und durch die daher verringerte Anpresskraft auch für den Positionswechsel des zweiten Endes nur eine geringere Kraft aufgewendet werden muss. Die Prinzipfunktion entspricht einem vorgesteuerten Ventil.

In einer anderen Ausführungsform hingegen wird in der Position, aus der heraus die zweistufige Kippbewegung ausführbar ist, ein Hauptventildichtsitz eines der Medienanschlüsse durch das zweite Ende des Ankers und ein kleinerer Vorsteuerdichtsitz dieses Medienanschlusses durch das erste Ende des Ankers verschlossen. Diese Ausführungsform stellt ein vorgesteuertes Ventil dar. Eine Hubbewegung am ersten Ende öff net den Vorsteuerdichtsitz und führt zu einem Druckabbau, durch den der Hauptventildichtsitz einfacher zu öffnen ist. Durch die kleinere Querschnittsfläche des Vorsteuerdichtsitzes wird dieser bei gleichem Druck mit einer entsprechend geringeren Druckkraft beaufschlagt als der Hauptventildichtsitz. Ein Hubweg des zweiten Endes zwischen den zwei Positionen kann dabei größer sein als ein Hubweg des ersten Endes. Ein Hubweg des zweiten Endes zwischen den zwei Positionen kann dabei größer sein als ein Hubweg des ersten Endes, so dass die Effizienz des Ventils weiter gesteigert wird.

Vorzugsweise ist ein Elastomer-Dichtelement zur Abdichtung des Medienanschlusses fest mit dem Ventilkörper verbunden. Mechanisches Spiel des Ankers wirkt sich so nicht so auf die Dichtigkeit aus, da die harte Dichtfläche des Ankers keiner Druckverformung unterliegt.

Der Anker kann eine scheibenförmige oder plattenförmige oder zylinderförmige Form aufweisen und eine Kipp- oder Hubbewegung ausführen.

Eine weitere vorteilhafte Ausgestaltung sieht vor, dass der Anker auf einem Drahtelement aufgehängt ist. Dadurch wird jegliche Reibung des Ankers vermieden, so dass auch keine Reibkräfte und kein Reibverschleiß auftreten.

Die Erfindung zeichnet sich durch eine Reihe von Vorteilen aus. Hierzu zählen insbesondere:
- die Anordnung kann gegenüber bekannten Ausführungen mit deutlich geringeren Kosten hergestellt werden;
- es sind sowohl 2/2- als auch 3/2-Wege-Ausführungen möglich. Außerdem können in jeder Ankerendlage mehrere Dichtsitze verschlossen werden;
- die Anordnung weist gegenüber vergleichbaren Ausführungen einen geringeren Totraum auf, da der Totraum im wesentlichen nur durch den für die Ventilschaltfunktion erforderlichen Hub bedingt ist;
- die Anordnung zeichnet sich durch gute Spülbarkeit aus;
- es können kurze Schaltzeiten erreicht werden;
- eine Medienerwärmung wird weitgehend verhindert;
- die Anordnung ist zur Miniaturisierung geeignet;
- die Anordnung kann sowohl als monostabile als auch bistabile Variante ausgeführt werden;
- die üblicherweise erforderlichen aufwendigen Maßnahmen zur Realisierung einer Medientrennung, insbesondere die Verwendung eines beweglichen Faltenbalgs, entfallen;
- das Magnetfeld der bei der monostabilen Ausführung verwendeten Permanentmagneteinrichtung wird durch den Anker abgeschirmt, so dass störende magnetische Wechselwirkungen mit anderen Komponenten des Magnetventils verhindert werden.
- Es besteht die Möglichkeit der Gleichteilverwendung bei verschiedenen Ventiltypen (monostabil, bistabil, 2-Wege, 3-Wege). Insbesondere können der Elektromagnet und ein Großteil der Teile des Ventilkörpers für alle Varianten genutzt werden. Lediglich der Anker und die weitere Anordnung müssen zur Ausführung der monostabilen oder bistabilen Variante angepasst werden.

Die Erfindung wird im Folgenden anhand eines Ausführungsbeispieles näher erläutert.

In der zugehörigen Zeichnung zeigen:
- Figur 1: eine monostabile Ausführungsform eines elektromagnetisch steuerbaren Ventils als 2/2-Wege-Ventil,
- Figur 2: eine bistabile Ausführungsform des elektromagnetisch steuerbaren Ventils als 3/2-Wege-Ventil,
- Figur 3: eine bistabile Ausführungsform des elektromagnetisch steuerbaren Ventils als 2/2-Wege-Ventil,
- Figur 4: eine monostabile Ausführungsform des elektromagnetisch steuerbaren Ventils mit zylindrischem Anker,
- Figur 5: eine Anordnung, bei der der Anker in einer Drahtanordnung aufgehängt ist,
- Figur 6: eine bistabile Ausführungsform eines elektromagnetisch steuerbaren Ventils, umfassend einen Elektromagneten mit einem U-förmigen Joch, dessen beide Jochpole mit einem Anker in Wechselwirkung stehen in einer ersten Position, bei der der Anker in Richtung einer weiteren Anordnung verschoben ist,
- Figur 7: das Ventil aus Figur 1 in einer zweiten Position, bei der der Anker in Richtung des Jochs verschoben ist,
- Figur 8: eine monostabile Ausführungsform des elektromagnetisch steuerbaren Ventils in einer ersten Position, bei der der Anker in Richtung einer weiteren Anordnung verschoben ist,
- Figur 9: das Ventil aus Figur 3 in einer zweiten Position, bei der der Anker in Richtung des Jochs verschoben ist,
- Figur 10: einen permanentmagnetischen Anker mit einer Magnetisierung, bei der zwischen einem Nordpol und einem Südpol verlaufende Feldlinien im Wesentlichen rechtwinklig zu einer Längsachse aus- und eintreten,
- Figur 11: einen Medienanschluss mit einem Elastomer-Dichtelement und dem Anker,
- Figur 12: ein Ventilkörpergehäuse mit zwei Ventildichtsitzen und einem zweistufig kippbaren Anker, und
- Figur 13: ein Ventilkörpergehäuse mit einem zweistufig kippbaren Anker und zwei Medienanschlüssen mit jeweils einem Hauptventildichtsitz und einem Vorsteuerventildichtsitz.

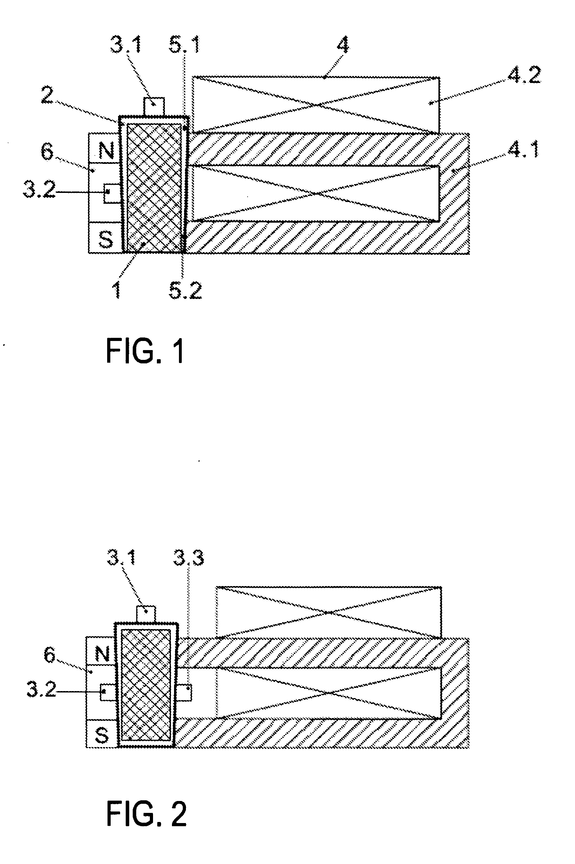

Das in Figur 1 dargestellte 2/2-Wege-Ventil weist einen weichmagnetischen Anker 1 auf, der sich in einem Ventilkörpergehäuse 2 aus einem nichtmagnetisierbaren Werkstoff befindet. Das Ventilkörpergehäuse besteht vorzugsweise aus Thermoplastspritzguss. Der Anker 1 kann um eine aus der Zeichenebene herausragende, hier nicht dargestellte Kippachse eine Schwenkbewegung ausführen. In das Ventilkörpergehäuse 2 münden die Medienanschlüsse 3.1 und 3.2. Das Ventilkörpergehäuse 2 liegt an einer Seite am Permanentmagnet 6 und an seiner gegenüberliegenden Seite am U-förmigen Joch 4.1 des Elektromagneten 4 an. Ein Schenkel des Jochs 4.1 ist von der Spule 4.2 umgeben. Der magnetische Kreis des Elektromagneten 4 verläuft durch das Joch 4.1 und wird durch den Anker 1 und zwei Luftspalte 5.1 und 5.2 geschlossen. Im stromlosen Zustand verläuft der magnetische Fluss des Permanentmagneten 6 vom dessen Nordpol N über den Anker 1 zum Südpol S und von dort durch den Permanentmagnet 5 zurück. Dabei wird der Anker 1 vom Permanentmagnet 6 angezogen. Der Anker 1 verharrt stabil in dieser Lage und verschließt dabei den Medienanschluss 3.2. Wenn die Spule 4.2 von einem Strom durchflossen wird, hat das System das Bestreben, die Luftspalte 5.1 und 5.2 zu schließen und der Anker 1 bewegt sich zum Joch 4.1. Dabei wird der Medienanschluss 3.2 freigegeben und das Medium kann durch die Medienanschlüsse 3.1 und 3.2 strömen. In der hier dargestellten Ausführung liegt der Anker 1 auf der Unterseite des Ventilkörpergehäuses 2 auf und führt eine Kippbewegung von beispielsweise ± 10° um eine in der Unterseite liegende Drehachse aus. Zur Stabilisierung der Position des Ankers 1 wirkt eine leichte magnetische Vorzugskraft auf den Anker 1, mit der dieser auf die Unterseite des Ventilkörpergehäuses 2 gedrückt wird. Dies wird erreicht, indem das U-förmige Joch 4.1 ebenso wie der als weitere Anordnung dienende Permanentmagnet 6 gegenüber dem Anker 1 leicht nach unten versetzt ist. Eine vorteilhafte Ausführung entsteht dadurch, dass der Anker 1 an einem Titandraht aufgehängt ist, mit dem eine reibungsfreie Lagerung ermöglicht wird.

**Figur 2** zeigt eine Ausführung als 3/2-Wege-Ventil. Hierbei münden die drei Medienanschlüsse 3.1, 3.2 und 3.3 in das Ventilkörpergehäuse 2, wobei die Medienanschlüsse 3.2 und 3.2 an gegenüberliegenden Flächen des Ventilkörpergehäuses 2 angeordnet sind und je nach Stellung des Ankers 1 von diesem verschlossen werden. Die Betätigung des Magnetventils erfolgt in gleicher Weise wie bei Figur 1 beschrieben.

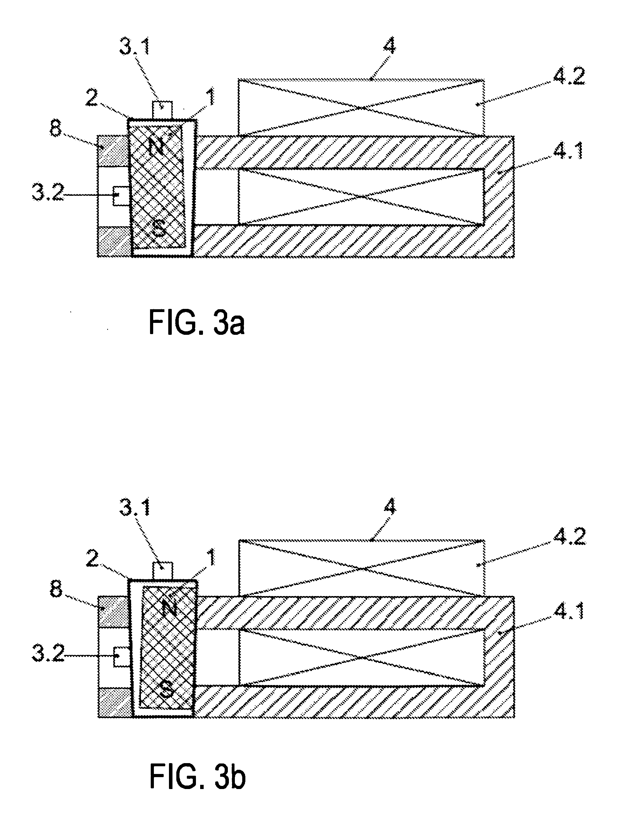

In **Figur 3** ist eine Ausführung als bistabiles 2/2-Wege-Ventil dargestellt. Hier besteht der Anker 1 aus hartmagnetischem Material und bildet einen Permanentmagnet mit den Nordpol N und dem Südpol S. Wie bei den oben beschriebenen monostabilen Ausführungen befindet sich auf einer Seite des Ventilkörpergehäuses 2 ein Elektromagnet 4. Auf der gegenüber liegenden Seite befindet sich ein weichmagnetischer Rückschluss 8.

Bei der in **Figur 3a** dargestellten Position befindet sich der Anker 1 in einer Stellung, in welcher der linke Medienanschluss 3.2 verschlossen ist. Der permanentmagnetische Anker 1 bildet mit dem magnetischen Rückschluss 8 und den dazwischen liegenden Luftspalten einen magnetischen Kreis und verbleibt stabil in dieser Lage.

Wird der Elektromagnet 4 von einem Stromimpuls durchflossen, so bewirkt dessen elektromagnetischer Fluss, dass der Anker 1 eine Kippbewegung zu diesem hin ausführt. Diesen Zustand zeigt **Figur 3b****.** Der Anker 1 verbleibt in dieser Position auch dann noch, wenn der Elektromagnet stromlos ist, da der vom permanentmagnetischen Anker 1 hervorgerufene magnetische Fluss durch das Joch 4.1 des Elektromagneten 4 geschlossen wird, so dass zwischen dem Anker 1 und dem Joch 4.1 magnetische Anziehungskräfte wirken. Wird der Elektromagnet 4 von einem Stromimpuls in entgegen gesetzter Richtung durchflossen, wird der Anker 1 vom Joch 4.1 abgestoßen und kippt in die bei Figur 3a beschriebene Position zurück.

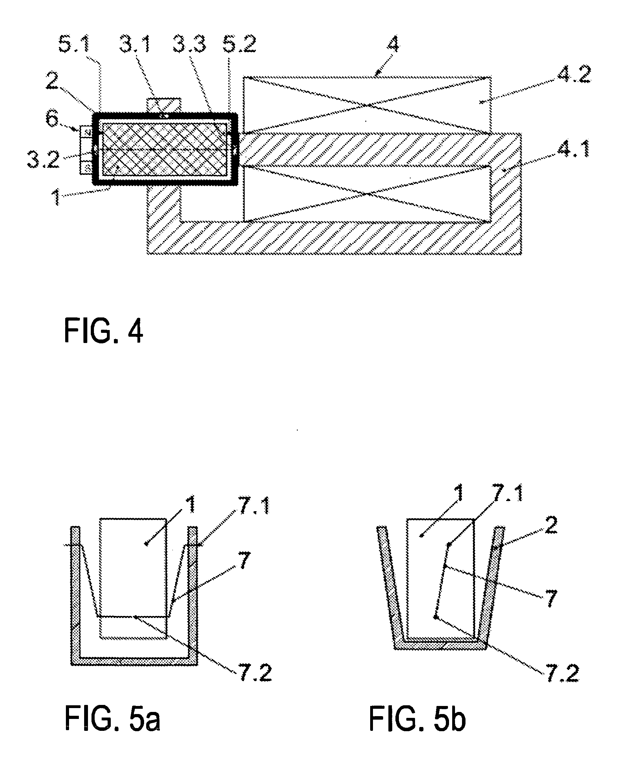

In **Figur 4** ist eine Ausführung dargestellt, bei der der Anker 1 als Zylinder ausgebildet ist und bei der Betätigung eine Hubbewegung ausführt.

**Figur 5** zeigt eine Anordnung in zwei Ansichten, bei der der Anker 1 in einer Drahtanordnung schaukelförmig aufgehängt ist. Hierzu ist ein Drahtbügel 7 mittig mit einer Befestigung 7.2 am Anker 1 angeordnet und an seinen Enden 7.1 am Ventilkörpergehäuse 2 befestigt.

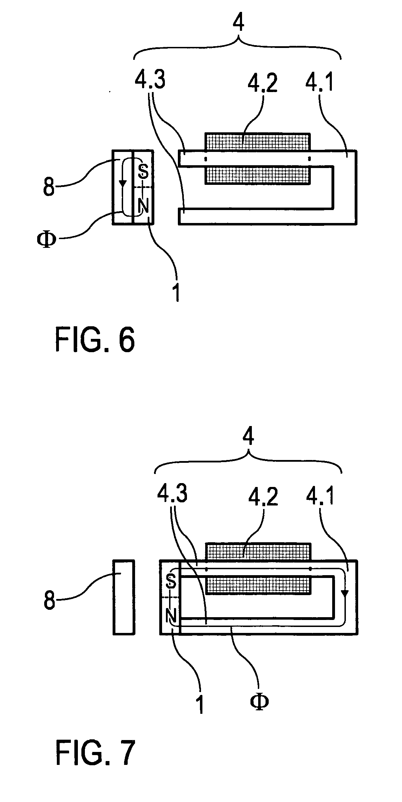

In **Figur 6** ist eine bistabile Ausführungsform eines elektromagnetisch steuerbaren Ventils, umfassend einen Elektromagneten 4 mit einer Spule 4.2 und einem U-förmigen Joch 4.1, dessen beide Jochpole 4.3 mit einem Anker 1 in Wechselwirkung stehen, gezeigt. Der Anker 1 befindet sich in einer ersten Position, in der er in Richtung einer weiteren Anordnung verschoben ist. Die weitere Anordnung ist hier als ein weichmagnetischer Rückschluss 8 , beispielsweise aus Eisen ausgebildet. Der Anker 1 ist permanentmagnetisch mit einem Nordpol N und einem Südpol S gebildet. Ein magnetischer Fluss Φ wirkt zwischen dem Anker 1 und dem magnetischen Rückschluss. Der Anker 1 verharrt bei unbestromter Spule 4.2 in der gezeigten ersten Position, da sich der magnetische Fluss Φ über den Rückschluss 8 schließt.

In **Figur 7** ist das Ventil aus Figur 6 in einer zweiten Position gezeigt, in der der Anker 1 in Richtung des Jochs 4.1 verschoben ist. Durch Bestromung der Spule 4.2 in der in Figur 1 gezeigten ersten Position wird der Anker 1 durch beide Jochpole 4.3 angezogen und in die zweite Position gebracht. In dieser Position ist keine weitere Bestromung der Spule 4.2 erforderlich, da der magnetische Fluss Φ auch ohne Bestromung zwischen dem Joch 4.1 und dem Anker 1 wirkt, so dass der Anker auch in der zweiten Position verharrt. Der magnetische Fluss Φ schließt sich dabei über das U-förmige Joch 4.1. Für einen Wechsel in die erste Position ist eine weitere kurzzeitige Bestromung der Spule 4.2 mit entgegen gesetzter Stromrichtung erforderlich, so dass sich eine abstoßende Wirkung zwischen dem Anker 1 und dem Joch 4.1 ergibt.

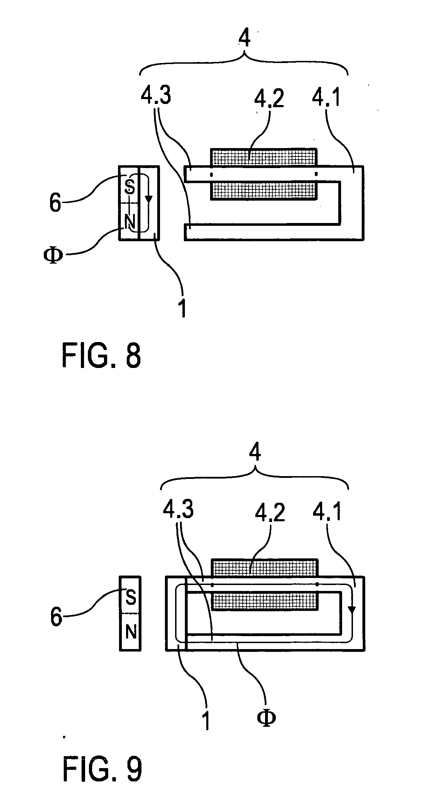

In **Figur 8** ist eine monostabile Ausführungsform des elektromagnetisch steuerbaren Ventils, umfassend den Elektromagneten 4 mit der Spule 4.2 und dem U-förmigen Joch 4.1, dessen beide Jochpole 4.3 mit dem Anker 1 in Wechselwirkung stehen, gezeigt. Der Anker 1 befindet sich in der ersten Position, in der er in Richtung der weiteren Anordnung verschoben ist. Die weitere Anordnung ist hier als ein Permanentmagnet 6 mit einem Nordpol N und einem Südpol S ausgebildet. Der Anker 1 ist aus einem weichmagnetischen Material, beispielsweise Eisen gebildet. Der magnetische Fluss Φ wirkt zwischen dem Anker 1 und dem magnetischen Rückschluss. Der Anker 1 verharrt bei unbestromter Spule 4.2 in der gezeigten ersten Position. Der magnetische Fluss Φ durch den Anker 1 schließt sich über den Permanentmagneten 8.

In **Figur 9** ist das Ventil aus Figur 8 in der zweiten Position gezeigt, in der der Anker 1 in Richtung des Jochs 4.1 verschoben ist. Durch Bestromung der Spule 4.2 in der in Figur 3 gezeigten ersten Position wird der Anker 1 durch beide Jochpole 4.3 angezogen und in die zweite Position gebracht. In dieser Position ist eine Dauerbestromung der Spule 4.2 erforderlich, da anderenfalls der Permanentmagnet 6 einen Wechsel des Ankers 1 zurück in die erste Position bewirken würde. Der magnetische Fluss Φ durch den Anker 1 schließt sich über das Joch 4.1.

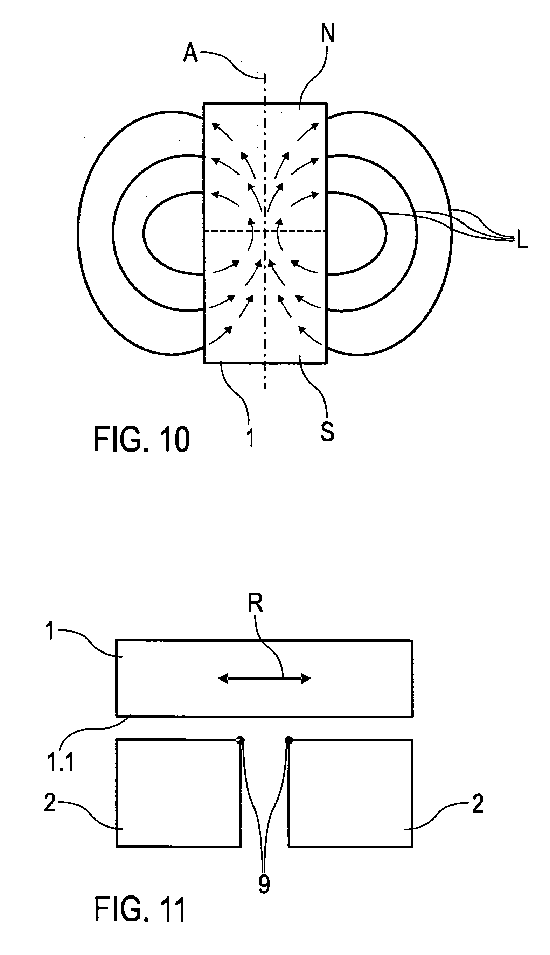

In **Figur 10** ist der permanentmagnetische Anker 1 aus den Figuren 6 und 7 gezeigt. Er weist eine Magnetisierung auf, bei der zwischen dem Nordpol N und dem Südpol S verlaufende Feldlinien L im Wesentlichen rechtwinklig zu einer Längsachse A aus- und eintreten. Eine solcher Verlauf der Feldlinien L ist durch einen mehrteiligen, insbesondere dreiteiligen Aufbau des Ankers 1 oder durch eine entsprechende Magnetisierung eines mittels Spritzguss gebildeten Ankers 1 erreichbar.

In **Figur 11** ist ein Medienanschluss 3 mit einem Elastomer-Dichtelement 9 und dem Anker 1 gezeigt. Im Gegensatz zu aus dem Stand der Technik bekannten Ventildichtsitzen ist das Elastomer-Dichtelement 9 nicht am Anker 1 sondern am Ventilkörpergehäuse 2 angeordnet. Der Anker 1 weist eine harte Dichtfläche 1.1 in Richtung des Medienanschlusses 3 auf. Die gezeigte Anordnung stellt die Dichtheit des Medienanschlusses 3 auch bei Spiel des Ankers 1 in radialer Richtung R sicher. Der Druckverformungsrest des Elastomer-Dichtelements 9 infolge wechselnder Belastung ist zwar auch hier unvermeidbar, führt jedoch nicht zu einer Verschlechterung der Dichtigkeit.

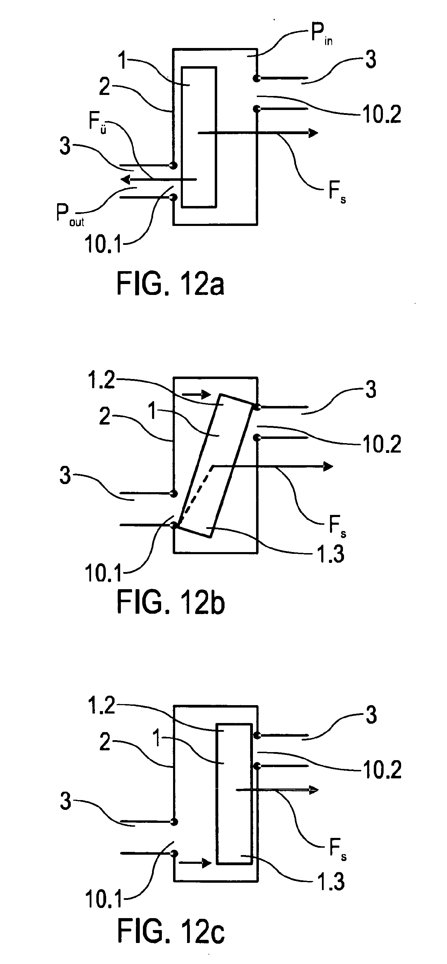

In **Figur 12** ist das Ventilkörpergehäuse 2 mit zwei Medienanschlüssen 3, die jeweils einen Ventildichtsitz 10.1, 10.2 umfassen und einem zweistufig kippbaren Anker 1 gezeigt. In Figur 12a befindet sich der Anker 1 in der ersten Position und dichtet dabei den Ventildichtsitz 10.1 im Bereich eines Endes des Ankers 1 ab. Im Inneren des Ventilkörpergehäuses 2 herrscht ein Eingangsdruck Pᵢₙ, der größer ist als ein hinter dem Ventildichtsitz 10.1 herrschender Ausgangsdruck Pₒᵤₜ. Aufgrund der Differenz zwischen dem Eingangsdruck Pᵢₙ und dem Ausgangsdruck Pₒᵤₜ ergibt sich eine Kraft F_{ü}, mit der der Anker 1 gegen den Ventildichtsitz 10.1 gedrückt wird. In der Gegenrichtung wirkt eine magnetisch bedingte Schaltkraft Fₛ. In Figur 12b ist der Anker 1 in einer ersten Stufe einer Kippbewegung infolge der Schaltkraft Fₛ gezeigt. Ein erstes Ende des Ankers 1, auf das die Kraft F_{ü} kaum wirkt kippt in Richtung des Ventildichtsitzes 10.2. Durch die Hebelwirkung wird der Ventildichtsitz 10.1 dabei undicht und die Druckdifferenz ausgeglichen. Dadurch entfällt die Kraft F_{ü}, so dass eine zweite Stufe der Kippbewegung, in der das zweite Ende des Ankers 1 die Position wechselt wie in Figur 12c gezeigt, mit geringer Schaltkraft Fₛ erfolgen kann. In Figur 12c ist dann der Ventildichtsitz 10.2 abgedichtet. Für einen entgegen gesetzten Positionswechsel wird das jeweils andere Ende des Ankers 1 als erstes und zweites Ende betrachtet.

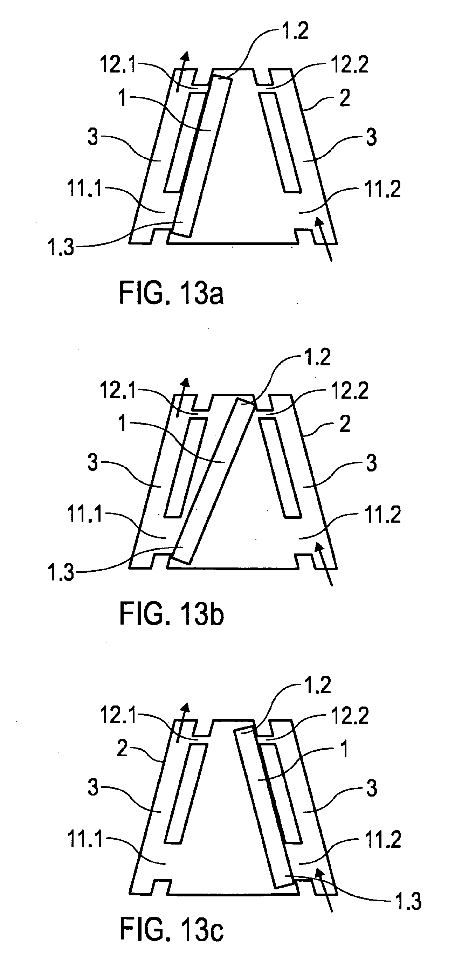

In **Figur 13** ist eine Ausführungsform des Ventilkörpergehäuses 2 mit zwei Medienanschlüssen 3, die jeweils einen Hauptventildichtsitz 11.1, 11.2 und einen Vorsteuerdichtsitz 12.1, 12.2 umfassen und einem zweistufig kippbaren Anker 1 gezeigt. Die Vorsteuerdichtsitze 12.1, 12.2 weisen dabei einen deutlich geringeren Querschnitt auf als die Hauptventildichtsitze 11.1, 11.2. In Figur 13a befindet sich der Anker 1 in der ersten Position und dichtet dabei den Hauptventildichtsitz 11.1 im Bereich des ersten Endes 1.2 des Ankers 1 und den Vorsteuerdichtsitz 12.1 im Bereich des zweiten Endes 1.3 des Ankers 1 ab. In Figur 13b ist der Anker 1 in einer ersten Stufe einer Kippbewegung gezeigt. Das erste Ende 1.2 des Ankers 1 kippt dabei vom Vorsteuerdichtsitz 12.1 in Richtung des Vorsteuerdichtsitzes 12.2. Ein Druckunterschied zwischen dem Innenraum des Ventilkörpergehäuses 2 und dem hinter dem Hauptventildichtsitz 11.1 und dem Vorsteuerdichtsitz 12.1 liegenden Medienanschluss 3 wird dadurch abgebaut, so dass zum Kippen des zweiten Endes 1.3 des Ankers 1 vom Hauptventildichtsitz 11.1 in Richtung des Hauptventildichtsitzes 11.2, wie in Figur 13c dargestellt, nur eine geringe Schaltkraft Fₛ erforderlich ist.

In den gezeigten Ausführungsformen ist zwischen dem Anker 1 und dem Elektromagneten 4, ebenso wie zwischen dem Anker 1 und der weiteren Anordnung eine nichtmagnetische Wandung als Teil des Ventilkörpergehäuses 2 angeordnet.

Alternativ kann das Ventilkörpergehäuse 2 hingegen Öffnungen aufweisen, durch die die Jochpole 4.1 soweit ins Innere des Ventilkörpergehäuses 2 ragen, dass der Anker 1 ohne Luftspalt direkt daran anschlagen kann. Die Jochpole 4.1 sind dabei vorzugsweise in den Öffnungen abgedichtet, beispielsweise mittels Elastomer-Dichtelementen.

### BEZUGSZEICHENLISTE

- 1: Anker (weichmagnetischer Stahl bei monostabiler Ausführung, Permanentmagnet bei bistabiler Ausführung)
1.1 Dichtfläche
1.2 erstes Ende
1.3 zweites Ende
- 2: Ventilkörpergehäuse
- 3: Medienanschluss
3.1 Oberer Medienanschluss
3.2 Linker Medienanschluss
3.3 Rechter Medienanschluss
- 4: Elektromagnet
4.1 Joch
4.2 Spule
4.3 Jochpole
- 5: Luftspalt
5.1 Oberer Luftspalt
5.2 Unterer Luftspalt
- 6: Permanentmagnet
- 7: Drahtbügel
7.1 Befestigung im Ventilkörpergehäuse
7.2 Befestigung im Anker
- 8: Weichmagnetischer Rückschluss
- 9: Elastomer-Dichtelement
- 10: Ventildichtsitz
- 11: Hauptventildichtsitz
- 12: Vorsteuerdichtsitz
- A: Längsachse
- Fₛ: Schaltkraft
- F_{ü}: Kraft
- L: Feldlinien
- N: Nordpol
- Pᵢₙ: Eingangsdruck
- Pₒᵤₜ: Ausgangsdruck
- R: radiale Richtung
- S: Südpol

## Patentansprüche

1. Elektromagnetisch steuerbares Ventil zum Steuern von flüssigen oder gasförmigen Medien mit einem Elektromagneten (4) und mindestens zwei Medienanschlüssen (3), die von einem Anker (1) verschließbar oder freigebbar sind, wobei der Anker (1) aus einem magnetisierbaren Material besteht und kipp- oder verschiebbar in einem Ventilkörpergehäuse (2) aus nichtmagnetischem Material angeordnet ist, wobei die Medienanschlüsse (3) in das Ventilkörpergehäuse (2) münden, und sich das Ventilkörpergehäuse (2) zwischen dem Elektromagnet (4) und einer weiteren Anordnung, die aus Permanentmagneten (6) oder weichmagnetischen Bauteilen (8) oder aus einem weiteren Elektromagneten (4) besteht, befindet, **dadurch gekennzeichnet, dass** der permanentmagnetische Anker (1) mehrteilig so gebildet ist, dass sich an einem Ende des Ankers (1) in Richtung einer Längsachse (A) ein Nordpol (N) und an einem in Richtung der Längsachse (A) gegenüberliegenden Ende ein Südpol (S) befindet, wobei zwischen Nordpol (N) und Südpol (S) verlaufende Feldlinien (L) im Wesentlichen rechtwinklig zur Längsachse (A) aus dem Anker (1) austreten und/oder in den Anker (1) eintreten.

2. Ventil nach Anspruch 1, **dadurch gekennzeichnet, dass** der Anker (1) dreiteilig gebildet ist.

3. Ventil nach Anspruch 2, **dadurch gekennzeichnet, dass** beim dreiteiligen Anker (1) ein Permanentmagnet zwischen zwei ferromagnetischen Komponenten angeordnet ist.

4. Ventil nach einem der vorhergehenden Ansprüche, **dadurch gekennzeichnet, dass** der Elektromagnet (4) ein U-förmiges Joch (4.1) mit zwei Jochpolen (4.3) umfasst, die mit dem Anker (1) in Wechselwirkung stehen.

5. Ventil nach einem der vorhergehenden Ansprüche, **dadurch gekennzeichnet, dass** zwischen dem Anker (1) und dem Elektromagneten (4) eine nichtmagnetische Wandung angeordnet ist.

6. Ventil nach einem der Ansprüche 1 bis 4, **dadurch gekennzeichnet, dass** das Ventilkörpergehäuse (2) mit Öffnungen versehen ist, durch die die Jochpole (4.3) in einen Innenraum des Ventilkörpergehäuses (2) soweit ragen, dass ein Anschlagen des Ankers (1) an den Jochpolen (4.3) ermöglicht ist.

7. Ventil nach einem der vorhergehenden Ansprüche, **dadurch gekennzeichnet, dass** durch den Anker (1) beim Umschalten zwischen zwei Positionen im Ventilkörpergehäuse (2) eine zweistufige Kippbewegung ausführbar ist, bei der zunächst ein erstes Ende des Ankers (1) und anschließend ein zweites Ende des Ankers (1) die Position wechselt.

8. Ventil nach Anspruch 7, **dadurch gekennzeichnet, dass** in der Position, aus der heraus die zweistufige Kippbewegung ausführbar ist, nur das zweite Ende des Ankers (1) einen Ventildichtsitz (10.1, 10.2) eines der Medienanschlüsse (3) verschließt.

9. Ventil nach Anspruch 7, **dadurch gekennzeichnet, dass** in der Position, aus der heraus die zweistufige Kippbewegung ausführbar ist, das zweite Ende des Ankers (1) einen Hauptventildichtsitz (11.1, 11.2) eines der Medienanschlüsse (3) verschließt und das erste Ende des Ankers (3) einen kleineren Vorsteuerdichtsitz (12.1, 12.2) dieses Medienanschlusses (3) verschließt.

10. Ventil nach Anspruch 9, **dadurch gekennzeichnet, dass** ein Hubweg des zweiten Endes zwischen den zwei Positionen größer ist als ein Hubweg des ersten Endes.

11. Ventil nach einem der vorhergehenden Ansprüche, **dadurch gekennzeichnet, dass** ein Elastomer-Dichtelement (9) zur Abdichtung des Medienanschlusses (3) fest mit dem Ventilkörpergehäuse (2) verbunden ist.

12. Ventil nach einem der vorhergehenden Ansprüche, **dadurch gekennzeichnet, dass** der Anker (1) scheiben-, platten- oder zylinderförmig ausgebildet ist.

13. Ventil nach einem der vorhergehenden Ansprüche, **dadurch gekennzeichnet, dass** das Ventilkörpergehäuse (2) aus Thermoplastspritzguss besteht.

14. Ventil nach einem der vorhergehenden Ansprüche, **dadurch gekennzeichnet, dass** das Joch (4.1) so angeordnet ist, dass der Anker (1) eine Vorzugskraft in Richtung Drehachse erfährt.

15. Ventil nach einem der vorhergehenden Ansprüche, **dadurch gekennzeichnet, dass** der Anker (1) mit einer Drahtanordnung (7) gelagert ist.

## Claims

1. Electromagnetically controllable valve for controlling liquid or gaseous media with one electromagnet (4) and at least two media connections (3), which are closable or releasable by an armature (1), wherein the armature (1) consists of a magnetizable material and is arranged in a tiltable or slidable way in a valve body housing (2) of non-magnetic material, wherein the media connections (3) run into the valve body housing (2), and the valve body housing (2) is located between the electromagnet (4) and a further arrangement which consists of permanent magnets (6) or soft magnetic components (8) or of a further electromagnet (4), **characterized in that** the permanently magnet armature (1) is formed of multiple parts such that a north pole (N) is located at one end of the armature (1) in the direction of a longitudinal axis (A), and a south pole (S) is located in the direction of the longitudinal axis (A) at the opposing end, wherein flux lines (L) running between north pole (N) and south pole (S) emerge from the armature (1) and/or enter into the armature (1) essentially at a right angle to the longitudinal axis (A).

2. Valve as claimed in claim 1, **characterized in that** the armature (1) is formed of three parts.

3. Valve as claimed in claim 2 **characterized in that** a permanent magnet is arranged between two ferromagnetic components for the three-part armature (1).

4. Valve as claimed in any of the preceding claims, **characterized in that** the electromagnet (4) comprises a U-shaped Yoke (4.1) having two yoke poles (4.3) which are interacting with the armature (1).

5. Valve as claimed in any of the preceding claims, **characterized in that** a non-magnetic wall is arranged between the armature (1) and the electromagnet (4).

6. Valve as claimed in any claim 1 through 4, **characterized in that** the valve body housing (2) is provided with openings through which the yoke poles (4.3) extend into an interior space of the valve body housing (2) for a distance which allows the armature (1) to strike against the yoke poles (4.3).

7. Valve as claimed in any of the preceding claims, **characterized in that** the armature (1), when changing between two positions in the valve body housing (2), allows the performance of a two-stage tilting movement during which, initially, a first end of the armature (1) and then a second end of the armature (1) changes its position.

8. Valve as claimed in claim 7, **characterized in that**, in the position from which the two-stage tilting movement is performable, only the second end of the armature (1) closes a valve seal seat (10.1, 10.2) of one of the media connections (3).

9. Valve as claimed in claim 7, **characterized in that**, in the position from which the two-stage tilting movement is performable, the second end of the armature (1) closes a main valve seal seat (11.1, 11.2) of one of the media connections (3) and the first end of the armature (3) closes a smaller pilot seal seat (12.1, 12.2) of this media connection (3).

10. Valve as claimed in claim 9, **characterized in that** one travel of the second end between the two positions is bigger than one travel of the first end.

11. Valve as claimed in any of the preceding claims, **characterized in that** an elastomer-sealing element (9) for sealing the media connection (3) is firmly connected to the valve body housing (2).

12. Valve as claimed in any of the preceding claims, **characterized in that** the armature (1) has a disk-shaped, plate-shaped or cylinder-shaped design.

13. Valve as claimed in any of the preceding claims, **characterized in that**, the valve body housing (2) consists of thermoplastic injection moulding.

14. Valve as claimed in any of the preceding claims, **characterized in that** the yoke (4.1) is arranged so as to subject the armature (1) to a first-stage force in the direction of the rotation axis.

15. Valve as claimed in any of the preceding claims, **characterized in that** the armature (1) is supported using a wire arrangement (7).

## Revendications

1. Soupape à commande électromagnétique pour la conduction de milieux liquides ou gazeux, comportant un électro-aimant (4) et au moins deux raccords de fluide (3) pouvant être ouverts ou fermés par un induit (1), l'induit (1) étant en matériau magnétique et étant disposé de manière à pouvoir pivoter ou coulisser dans un carter de corps de soupape (2) en matériau non magnétique, les raccords de fluide (3) débouchant dans le carter de corps de soupape (2), et le carter de corps de soupape (2) étant disposé entre l'électro-aimant (4) et un autre dispositif composé d'aimants permanents (6), de composants magnétiques doux (8) ou d'un autre électro-aimant (4), **caractérisée en ce que** l'induit (1) est constitué de plusieurs parties, de telle manière qu'un pôle nord (N) est situé à une extrémité de l'induit (1) en direction d'un axe longitudinal (A), et un pôle sud (S) à une extrémité opposée en direction de l'axe longitudinal (A), des lignes de champ (L) s'étendant entre le pôle nord (N) et le pôle sud (S) partant de l'induit (1) et/ou allant vers l'induit (1) sensiblement perpendiculairement à l'axe longitudinal (A).

2. Soupape selon la revendication 1, **caractérisée en ce que** l'induit (1) est constitué de trois parties.

3. Soupape selon la revendication 2, **caractérisée en ce que**, pour former l'induit (1) en trois parties, un aimant permanent est disposé entre deux composants ferromagnétiques.

4. Soupape selon l'une des revendications précédentes, **caractérisée en ce que** l'électro-aimant (4) comprend une culasse (4.1) en forme de U avec deux pôles de culasse (4.3) interagissant avec l'induit (1).

5. Soupape selon l'une des revendications précédentes, **caractérisée en ce qu'**une paroi non magnétique est disposée entre l'induit (1) et l'électro-aimant (4).

6. Soupape selon l'une des revendications 1 à 4, **caractérisée en ce que** le carter de corps de soupape (2) est pourvu d'ouvertures par lesquelles les pôles de culasse (4.3) pénètrent dans un espace intérieur du carter de corps de soupape (2) jusqu'à permettre une butée de l'induit (1) contre les pôles de culasse (4.3).

7. Soupape selon l'une des revendications précédentes, **caractérisée en ce qu'**un mouvement de pivotement en deux phases est exécutable par l'induit (1) lors de la commutation entre deux positions dans le carter de corps de soupape (2), une première extrémité de l'induit (1) changeant de position avant une deuxième extrémité de l'induit (1).

8. Soupape selon la revendication 7, **caractérisée en ce que** dans la position à partir de laquelle le mouvement de pivotement en deux phases est exécutable, seule la deuxième extrémité de l'induit (1) ferme un siège d'étanchéité de soupape (10.1, 10.2) d'un des raccords de fluide (3).

9. Soupape selon la revendication 7 , **caractérisée en ce que** dans la position à partir de laquelle le mouvement de pivotement en deux phases est exécutable, la deuxième extrémité de l'induit (1) ferme un siège d'étanchéité de soupape principal (11.1, 11.2) d'un des raccords de fluide (3) et la première extrémité de l'induits (3) un siège d'étanchéité pilote (12.1, 12.2) de ce raccord de fluide (3).

10. Soupape selon la revendication 9, **caractérisée en ce qu'**une course de la deuxième extrémité entre les deux positions est supérieure à une course de la première extrémité.

11. Soupape selon l'une des revendications précédentes, **caractérisée en ce qu'**un élément d'étanchéité élastomère (9) pour l'étanchéité du raccord de fluide (3) est fixement raccordé au carter de corps de soupape (2).

12. Soupape selon l'une des revendications précédentes, **caractérisée en ce que** l'induit (1) est réalisé en forme de disque, de plaque ou de cylindre.

13. Soupape selon l'une des revendications précédentes, **caractérisée en ce que** le carter de corps de soupape (2) est une pièce injectée en thermoplastique.

14. Soupape selon l'une des revendications précédentes, **caractérisée en ce que** la culasse (4.1) est disposée de telle manière que l'induit (1) subit une force d'attraction en direction de l'axe de rotation.

15. Soupape selon l'une des revendications précédentes, **caractérisée en ce que** l'induit (1) est monté avec un dispositif à fil (7).
